(19) **Europäisches Patentamt European Patent Office Office européen des brevets**

(11) **EP 4 625 317 A1**

(12) **EUROPEAN PATENT APPLICATION**
published in accordance with Art. 153(4) EPC

(43) Date of publication:
01.10.2025 Bulletin 2025/40

(51) International Patent Classification (IPC):
*G06T 7/00* (2017.01)

(21) Application number: 24892495.3

(22) Date of filing: 07.08.2024

(86) International application number:
PCT/CN2024/110408

(87) International publication number:
WO 2025/148294 (17.07.2025 Gazette 2025/29)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.01.2024 CN 202410037531

(71) Applicant: Contemporary Amperex Technology
Co., Limited
Jiaocheng District
Ningde
Fujian 352100 (CN)

(72) Inventors:
• CHEN, Zhipeng
  Ningde, Fujian 352100 (CN)
• CHEN, Chao
  Ningde, Fujian 352100 (CN)
• MA, Lin
  Ningde, Fujian 352100 (CN)
• XUE, Yucong
  Ningde, Fujian 352100 (CN)
• LIAO, Guohang
  Ningde, Fujian 352100 (CN)
• HAN, Donglu
  Ningde, Fujian 352100 (CN)

(74) Representative: Gong, Jinping
CocreateIP
Neumarkter Straße 21
81673 München (DE)

(54) **CAMERA INSTALLATION DEVIATION DETERMINATION METHOD AND VISUAL-INSPECTION COMPENSATION METHOD**

(57) The present application provides a method for determining an installation deviation of a camera and a visual detection compensation method. The camera is configured to capture an image of an object to be detected. When a deviation exists in the installation of the camera, the deviation will eventually be reflected in a captured image. In order to effectively determine the installation deviation of the camera relative to the object to be detected, the method for determining the installation deviation of the camera includes: fixing a calibration part onto the object to be detected, where the calibration part includes a base portion and a protruding portion protruding from the base portion, the base portion has a calibration plane adjacent to a root of the protruding portion, and the calibration plane has a first width; capturing an image of the calibration part by using the camera; determining a second width of a portion not blocked by the protruding portion of the calibration plane of the base portion in the image of the calibration part; and determining the installation deviation of the camera relative to the object to be detected according to the first width, the second width, and a height of the protruding portion protruding from the base portion.

FIG. 3

## Description

## CROSS-REFERENCE TO RELATED APPLICATIONS

The present application claims priority to Chinese Patent Application No. 2024100375311, filed with the China National Intellectual Property Administration on January 10, 2024 and entitled "METHOD FOR DETERMINING INSTALLATION DEVIATION OF CAMERA AND VISUAL DETECTION COMPENSATION METHOD", which is incorporated herein by reference in its entirety.

## TECHNICAL FIELD

The present application relates to the technical field of battery manufacturing, and in particular to a method and apparatus for determining an installation deviation of a camera, a visual detection compensation method and apparatus for an electrode plate winding system, a computing device, a battery electrode plate winding system, a computer-readable storage medium, and a computer program product.

## BACKGROUND

Energy conservation and emission reduction are key to the sustainable development of an automotive industry, and electric vehicles have become an important part of the sustainable development of the automotive industry due to their advantages in energy conservation and environmental protection. For electric vehicles, battery technology is also an important factor related to their development.

Lithium batteries may be divided into cylindrical batteries, square batteries, and pouch batteries according to their shapes. The production process of different types of lithium batteries varies to some extent, but overall, the production process of lithium batteries may be divided into a front-end process (electrode plate manufacturing), an intermediate process (battery cell synthesis), and a back-end process (formation and encapsulation). In the front-end process, the processing and manufacturing of a positive electrode plate and a negative electrode plate may be completed respectively. In the intermediate process, the electrode plates may be wound (or laminated), injected with liquid and encapsulated to manufacture battery cells. In the winding process, a winding machine may be used to sequentially wind the positive and negative electrode plates and the separator into a cylindrical or square battery cell. To detect the quality of winding, an image acquisition apparatus (such as a camera) may be used to perform image acquisition in the winding process, and visual detection may be performed based on the acquired image. Through visual detection, the poor condition of the tab of the wound electrode plate can be detected, including, for example, tab misalignment, tab folding, tab damage, tab missing, etc.

The methods described here may not necessarily be methods previously envisioned or adopted. Unless otherwise specified, it should not be assumed that any method described here is considered prior art solely because it is included here. Similarly, unless otherwise specified, the problems mentioned here should not be considered as recognized in any prior art.

## SUMMARY

When there is a deviation in the installation of a camera, the deviation will eventually be reflected in a captured image. In order to effectively determine the installation deviation of the camera relative to an object to be detected, the present application provides a method and apparatus for determining an installation deviation of a camera, a visual detection compensation method and apparatus for an electrode plate winding system, a computing device, a battery electrode plate winding system, a computer-readable storage medium, and a computer program product.

According to a first aspect, an embodiment of the present application provides a method for determining an installation deviation of a camera. The camera is configured to capture an image of an object to be detected. The method for determining the installation deviation of the camera includes: fixing a calibration part onto the object to be detected, where the calibration part includes a base portion and a protruding portion protruding from the base portion, the base portion has a calibration plane adjacent to a root of the protruding portion, and the calibration plane has a first width; capturing an image of the calibration part by using the camera; determining a second width of a portion not blocked by the protruding portion of the calibration plane of the base portion in the image of the calibration part; and determining the installation deviation of the camera relative to the object to be detected according to the first width, the second width, and a height of the protruding portion protruding from the base portion.

In the technical solution provided in this embodiment of the present application, a calibration part including a base portion with a preset width and a protruding portion with a preset height protruding from the base portion is used, and the width of a portion not blocked by the protruding portion of the calibration plane of the base portion of the calibration part in the image captured by the camera is determined, thus effectively determining the installation deviation of the camera relative to the object to be detected, and helping to identify the extent of influence of the installation deviation on visual detection using the camera.

In some embodiments, the object to be detected is rotatable around a rotation axis thereof, and the determining the installation deviation of the camera relative to the object to be detected according to the first width, the second width, and a height of the protruding portion protruding from the base portion may include: determining a width difference between the first width and the second width; and determining a first included angle between the following two as the installation deviation in a first reference plane perpendicular to the rotation axis according to the width difference and the height: a central axis of a lens of the camera; and a connecting line between a first projection point of the rotation axis in the first reference plane and the camera. Therefore, the installation deviation angle of the camera can be determined, thus further quantifying the installation deviation of the camera.

In some embodiments, a surface of the calibration plane is configured such that in the image of the calibration part. A grayscale value of the calibration plane is different from a grayscale value of the protruding portion. In addition, the determining a second width of a portion not blocked by the protruding portion of the calibration plane of the base portion in the image of the calibration part may include: determining a boundary of the portion not blocked by the protruding portion of the calibration plane of the base portion according to the grayscale values of the calibration plane and the protruding portion; and determining the second width based on the boundary. Therefore, the efficiency and accuracy of determining the second width can be further improved, thus improving the efficiency and accuracy of determining the installation deviation of the camera relative to the object to be detected.

In some embodiments, the object to be detected is a winding mandrel for winding a battery electrode plate. Therefore, the method for determining the installation deviation of the camera is applicable to the scenario where the winding mandrel is used.

In some embodiments, the camera includes a line scan camera, and the capturing an image of the calibration part by using the camera may include: capturing multiple image rows of the calibration part by using the line scan camera during rotation of the object to be detected, where each image row extends along a direction parallel to the rotation axis; and stitching the multiple image rows to acquire the image of the calibration part. By using the line scan camera to capture multiple image rows of the calibration part during the rotation of the object to be detected, and stitching the image rows captured by the line scan camera, higher resolution image data of the calibration part can be obtained, thus better meeting the need of capturing the image of the calibration part of rotating motion during rotation.

According to a second aspect, an embodiment of the present application provides a visual detection compensation method for an electrode plate winding system. The electrode plate winding system includes a camera and a winding mandrel for winding a battery electrode plate. The camera is configured to capture an image of the winding mandrel. The visual detection compensation method for the electrode plate winding system includes: acquiring an installation deviation of the camera relative to the winding mandrel by using the method for determining the installation deviation of the camera in the above embodiment; and determining a deviation compensation required for visual detection of the electrode plate wound on the winding mandrel by using the camera according to a winding radius of the winding mandrel, a distance between the camera and the winding mandrel, and the installation deviation. Therefore, when there is a deviation in the installation of the camera, it can compensate for the installation deviation during visual detection, thus reducing the influence of the installation deviation of the camera on a visual detection result.

In some embodiments, the determining a deviation compensation required for visual detection of the electrode plate wound on the winding mandrel by using the camera according to a winding radius of the winding mandrel, a distance between the camera and the winding mandrel, and the installation deviation may include: determining a second included angle between the following two as the deviation compensation in a second reference plane perpendicular to a rotation axis of the winding mandrel: a connecting line between a second projection point of the rotation axis in the second reference plane and the camera; and a connecting line between a reference point and the second projection point, where the reference point is an intersection point between a central axis of a lens of the camera and a current outer periphery of the wound electrode plate. Therefore, the deviation compensation angle can be determined, thus further quantifying the deviation compensation.

In some embodiments, the winding radius is associated with a radius of the winding mandrel and a current number of layers of the wound electrode plate, and the method may further include: for an $N^{th}$-layer electrode plate segment wound on the winding mandrel, determining a misalignment amount of a battery tab of the $N^{th}$-layer electrode plate segment relative to a battery tab of a first-layer electrode plate segment according to the second included angle, where N is an integer greater than 1. Therefore, in a case that there is a deviation in the installation of the camera, the misalignment of the tab in the wound electrode plate can still be accurately detected.

According to a third aspect, an embodiment of the present application provides an apparatus for determining an installation deviation of a camera. The camera is configured to capture an image of an object to be detected. The apparatus for determining the installation deviation of the camera includes: an image acquisition module configured to control the camera to capture an image of a calibration part, where the calibration part is fixed onto the object to be detected, the calibration part includes a base portion and a protruding portion protruding from the base portion, the base portion has a calibration plane adjacent to a root of the protruding portion, and the calibration plane has a first width; a width determination module configured to determine a second width of a portion not blocked by the protruding portion of the calibration plane of the base portion in the image of the calibration part; and an installation deviation determination module configured to determine the installation deviation of the camera relative to the object to be detected according to the first width, the second width, and a height of the protruding portion protruding from the base portion.

According to a fourth aspect, an embodiment of the present application provides a visual detection compensation apparatus for an electrode plate winding system. The electrode plate winding system includes a camera and a winding mandrel for winding a battery electrode plate. The camera is configured to capture an image of the winding mandrel. The visual detection compensation apparatus for the electrode plate winding system includes: an installation deviation acquisition module configured to acquire an installation deviation of the camera relative to the winding mandrel by using the method for determining the installation deviation of the camera in the above embodiment; and a deviation compensation determination module configured to determine a deviation compensation required for visual detection of the electrode plate wound on the winding mandrel by using the camera according to a winding radius of the winding mandrel, a distance between the camera and the winding mandrel, and the installation deviation.

According to a fifth aspect, an embodiment of the present application provides a computing device, which includes: at least one processor; and at least one memory in communication with the at least one processor. The at least one memory has instructions stored therein. The instructions, when executed by the at least one processor solely or jointly, cause the computing device to execute the method in the above embodiment.

According to a sixth aspect, an embodiment of the present application provides a battery electrode plate winding system, which includes: a winding machine including a winding mandrel for winding a battery electrode plate; a camera configured to capture an image to be detected of the electrode plate wound on the winding mandrel; and the computing device in the above embodiment.

According to a seventh aspect, an embodiment of the present application provides a computer-readable storage medium having instructions stored therein. The instructions, when executed by one or more processors of a computing device solely or jointly, cause the computing device to execute the method in the above embodiment.

According to an eighth aspect, an embodiment of the present application provides a computer program product, including instructions. The instructions, when executed by one or more processors of a computing device solely or jointly, cause the computing device to execute the method in the above embodiment.

The above description only refers to an overview of the technical solution of the present application. In order to understand the technical means of the present application more clearly, it can be implemented according to the content of the description. In order to make the above-mentioned and other purposes, features and advantages of the present application more apparent, the specific implementations of the present application are listed below.

## BRIEF DESCRIPTION OF THE DRAWINGS

In the drawings, unless otherwise specified, the same reference signs throughout multiple drawings represent the same or similar components or elements. These drawings may not necessarily be drawn to scale. It needs to be understood that these drawings only depict some embodiments disclosed in the present application and should not be construed as limiting the scope of the present application.

FIG. 1 is a schematic diagram of capturing an image of an electrode plate wound on a winding mandrel by using a camera in related arts;
FIG. 2 is a flowchart of a method for determining an installation deviation of a camera in some embodiments of the present application;
FIG. 3 is a schematic diagram of capturing an image in a method for determining an installation deviation of a camera in some embodiments of the present application;
FIG. 4 is a schematic diagram of a calibration part and an image of the calibration part in FIG. 3.
FIG. 5 is a flowchart of some processes of a method for determining an installation deviation of a camera in some embodiments of the present application;
FIG. 6 is another flowchart of some processes of a method for determining an installation deviation of a camera in some embodiments of the present application;
FIG. 7 is another flowchart of some processes of a method for determining an installation deviation of a camera in some embodiments of the present application;
FIG. 8 is a flowchart of a visual detection compensation method for an electrode plate winding system in some embodiments of the present application;
FIG. 9 is a schematic diagram of determining a second included angle by using a visual detection compensation method for an electrode plate winding system in some embodiments of the present application;
FIG. 10 is a schematic diagram of a calibration part in some embodiments of the present application;
FIG. 11 is an exemplary block diagram of an apparatus for determining an installation deviation of a camera in some embodiments of the present application;
FIG. 12 is an exemplary block diagram of a visual detection compensation apparatus for an electrode plate winding system in some embodiments of the present application;

FIG. 13 is a block diagram of an exemplary computing device applicable to an exemplary embodiment; and

FIG. 14 is a schematic diagram of a battery electrode plate winding system in some embodiments of the present application.

Descriptions of reference numerals:

110-winding mandrel; 120-electrode plate; 130-camera; 300-calibration part; 310-base portion; 311-calibration plane; 320-protruding portion; 1010-fixing portion; 1020-stepped bump; 1400-battery electrode plate winding system; and 1413-line light source.

**DETAILED DESCRIPTION**

The embodiments of the technical solutions of the present application will be described in detail below with reference to the drawings. The following embodiments are only used to describe the technical solutions of the present application more explicitly, and are thus only interpreted as examples, rather than used to limit the protection scope of the present application.

Unless otherwise defined, meanings of all technical and scientific terms used herein are the same as those usually understood by those skilled in the art to which the present application belongs. Terms used herein are merely intended to describe the specific embodiments, instead of limiting the present application. The terms "include", "comprise", and any variant thereof in the description and the claims of the present application and the description of the drawings are intended to cover a non-exclusive inclusion.

In the description of the embodiments of the present application, the technical terms "first", "second", and the like are only intended to distinguish different objects, and should not be understood as indicating or implying relative importance or implying the number, specific order or primary and secondary relationship of indicated technical features. In the description of the embodiments of the present application, "multiple" means two or more, unless otherwise expressly and specifically defined.

"Embodiment" mentioned here means that particular features, structures, or characteristics described with reference to the embodiment may be included in at least one embodiment of the present application. The term appearing at different positions of this description may not refer to the same embodiment or an independent or alternative embodiment that is mutually exclusive with another embodiment. Those skilled in the art may explicitly or implicitly understand that the embodiments described herein may be combined with other embodiments.

In the description of the embodiments of the present application, the term "and/or" is merely an association to describe associated objects, and means that three relationships may be exist. For example, A and/or B may represent the following three cases: only A exists, both A and B exist, and only B exists. In addition, the character "/" in this specification generally indicates an "or" relationship between the associated objects.

In the descriptions of the embodiments of the present application, the term "multiple" refers to more than two (including two), and similarly, "multiple groups" refers to more than two groups (including two groups); and "multiple pieces" refers to more than two pieces (including two pieces).

In the description of the embodiments of the present application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing the present application and simplifying the description, rather than indicating or implying that the involved device or element should have a specific orientation or should be configured or operated in the specific orientation, and thus cannot be understood as limitations on the embodiments of the present application.

In the description of the embodiments of the present application, unless otherwise explicitly specified or defined, the technical terms such as "install", "connected", "connect", and "fix" should be understood in a broad sense. For example, it may be fixed connection, detachable connection, or integral connection; or it may be mechanical connection or electrical connection; or it may be direct connection, indirect connection through an intermediate medium, internal communication between two components, or an interaction relationship between two components. For those skilled in the art, the specific meanings of the above terms in the embodiments of the present application may be interpreted according to the specific situations.

Nowadays, from the perspective of development of the market situation, power batteries are applied increasingly. The power batteries are not only used in energy storage power systems such as water power plant, fire power plant, wind power plant and solar power plant, but also in electric transportations such as electric bicycles, electric motorcycles, electric vehicles, as well as in military equipment, aerospace and other fields. With continuous expansion of application fields of traction batteries, market demands for traction batteries are also expanding.

As described above, an image acquisition apparatus (such as a camera) may be used to perform image acquisition in a winding process, and visual detection may be performed based on the acquired image. A quality of the image acquired by the camera has a significant influence on a subsequent visual detection result.

The quality of the image acquired by the camera depends on various factors, such as camera's own parameters (such as sensor size, pixel size, lens quality, aperture size, and shutter speed), as well as the installation of the camera, which also influences the quality of the acquired image. When there is a deviation in the installation of the camera, the deviation will eventually be reflected in a captured image, so the detection based on the image may also have a deviation.

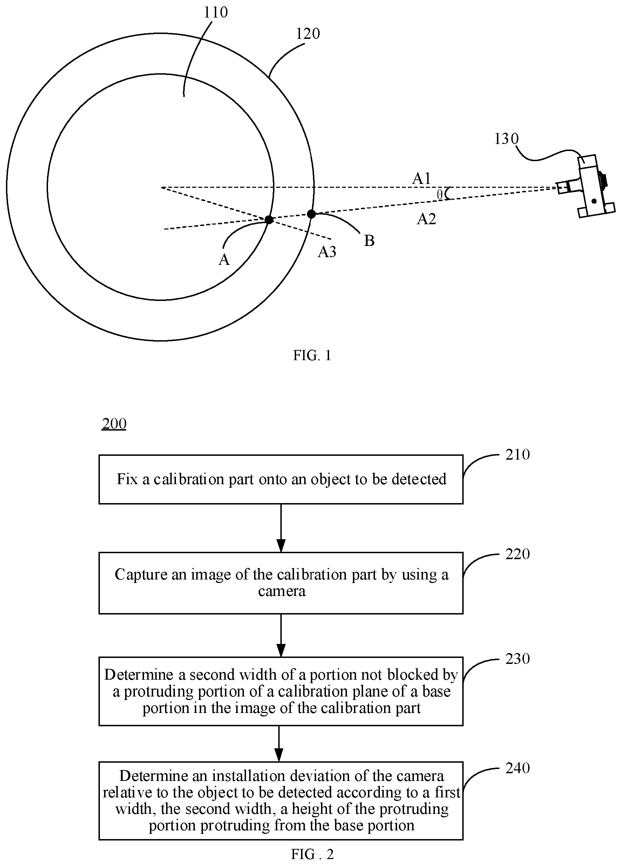

For example, FIG. 1 is a schematic diagram of capturing an image of an electrode plate wound on a winding mandrel by using a camera in related arts. FIG. 1 shows a top view (i.e., a view perpendicular to a rotation axis of a winding mandrel) of a winding mandrel 110 of an electrode plate winding machine and an electrode plate 120 wound on the winding mandrel 110. In the related arts, a camera 130 may be used to capture an image of the winding mandrel 110 and the electrode plate 120, and visual detection may be performed based on the image captured by the camera 130. If there is a deviation in an installation angle of the camera 130 (for example, if a central axis of a lens of the camera 130 does not pass through a center of a circle in the top view of the winding mandrel 110, and this deviation is as shown in FIG. 1 by an included angle θ between a connecting line A1 and the central axis A2 of the lens of camera 130), then a point A and a point B where an offset from each other should be originally detected on the wound electrode plate, will be imaged by the camera 130 as overlapping points, which will result in a detection deviation. For example, the point A and the point B may represent tabs on different layers of the wound electrode plate. In the situation shown in FIG. 1, there is a displacement deviation between the tab at the point A and the tab at the point B (as can be seen from a line A3, the point B is not located on the line A3). The displacement deviation of the tabs may belong to tab misalignment. However, when there is a deviation in the installation of the camera 130, since the point A and the point B are overlapped in the image captured by the camera 130, this tab misalignment will not be detected.

In view of this, embodiments of the present application provide a method and apparatus for determining an installation deviation of a camera, a visual detection compensation method and apparatus for an electrode plate winding system, a calibration part, a computing device, a battery electrode plate winding system, a computer-readable storage medium, and a computer program product. A calibration part including a base portion with a preset width and a protruding portion with a preset height protruding from the base portion is used, and a width of a portion not blocked by the protruding portion of the calibration plane of the base portion of the calibration part in the image captured by the camera is determined, thus effectively determining the installation deviation of the camera relative to the object to be detected, and helping to identify an extent of influence of the installation deviation on visual detection using the camera.

The method for determining the installation deviation of the camera disclosed in the embodiment of the present application may be used for, but not limited to, detecting the installation deviation of the camera in various detection scenarios. Correspondingly, the object to be detected may include various workpieces. In addition, the visual detection compensation method for the electrode plate winding system disclosed in the embodiment of the present application can be used for, but not limited to, visual detection compensation in the production of batteries for vehicles, ships, or aircrafts.

An embodiment of the present application provides a method for determining an installation deviation of a camera. FIG. 2 is a flowchart of a method 200 for determining an installation deviation of a camera in some embodiments of the present application. As shown in FIG. 2, the method 200 for determining the installation deviation of the camera includes the following:

step 210: fix a calibration part onto an object to be detected, where the calibration part includes a base portion and a protruding portion protruding from the base portion, the base portion has a calibration plane adjacent to a root of the protruding portion, and the calibration plane has a first width;
step 220: capture an image of the calibration part by using a camera;
step 230: determine a second width of a portion not blocked by the protruding portion of the calibration plane of the base portion in the image of the calibration part; and
step 240: determine the installation deviation of the camera relative to the object to be detected according to the first width, the second width, and a height of the protruding portion protruding from the base portion.

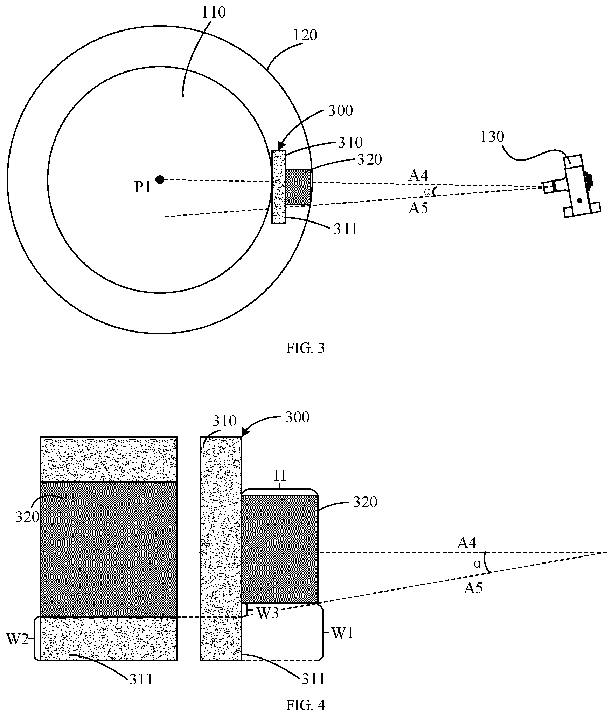

Referring to FIG. 3 and FIG. 4, FIG. 3 is a schematic diagram of capturing an image in a method 200 for determining an installation deviation of a camera in some embodiments of the present application; and FIG. 4 is a schematic diagram of a calibration part and an image of the calibration part in FIG. 3.

As shown in FIG. 3 and FIG. 4, the calibration part 300 includes a base portion 310 and a protruding portion 320 protruding from the base portion 310, the base portion 310 has a calibration plane 311 adjacent to a root of the protruding portion 320, and the calibration plane 311 has a first width W1.

In step 210, the calibration part 300 may be fixed onto the object to be detected (such as the winding mandrel 110) by screwing, keying, bonding, fastening, binding, etc. It is to be understood that the object to be detected may be any other workpiece. In the scenario where the object to be detected is a winding mandrel for winding a battery electrode plate, the calibration part 300 may be fixed onto the winding mandrel on which no electrode plate is wound. Alternatively, the calibration part 300 may be firstly fixed onto the winding mandrel, and then the electrode plate is wound on the winding mandrel where the calibration part 300 is fixed. In an example, when fixing the calibration part 300, a side of the calibration part 300 with the protruding portion 320 may be oriented towards a direction of the camera 130.

In step 220, an image of the calibration part 300 is captured by using the camera. The camera 130 may be controlled to capture the image through a controller in communication with the winding mandrel 110. Alternatively, the camera 130 may be manually controlled to capture the image, as long as the obtained image includes the calibration part 300.

Continuously referring to FIG. 4, a right side of FIG. 4 shows an enlarged view of the calibration part 300 in FIG. 3, and a left side of FIG. 4 shows an image of the calibration part 300 captured by the camera 130. Since the calibration part 300 has a base portion 310 and a protruding portion 320 protruding from the base portion 310, when the camera 130 captures the image towards the calibration part 300, the protruding portion 320 is closer to the camera 130 relative to the base portion 310. Therefore, in the image captured by the camera 130, the protruding portion 320 will block a portion of the base portion 310, and the size of this portion is related to the installation angle of the camera. In other words, the blocked portion can reflect the deviation of the installation angle of the camera. Therefore, in step 230, the second width W2 of a portion not blocked by the protruding portion 320 of the calibration plane 311 of the base portion 310 in the image of the calibration part 300 is determined.

In step 240, the installation deviation of the camera relative to the object to be detected is determined according to the first width W1, the second width W2, and a height of the protruding portion 320 protruding from the base portion 310.

The proportion of the second width W2 to the first width W1 reflects a blocking situation of the calibration plane 311 of the base portion 310 by the protruding portion 320. Further, since the extent of the blocking is determined by both the installation deviation of the camera and the height H of the protruding portion 320 protruding from the base portion 310, and the height H is known, the installation deviation of the camera relative to the object to be detected may be determined according to the first width W1, the second width W2, and the height H.

For example, the extent of the installation deviation may be determined. In an example, in a case that the first width W1 and the height H are constant, the larger the second width W2, the smaller the blocked portion of the calibration plane 311 of the base portion 310 by the protruding portion 320; and the smaller the second width W2, the larger the blocked portion of the calibration plane 311 of the base portion 310 by the protruding portion 320.

In an example, when the blocked portion is too large (for example, exceeding a threshold), it may be determined that the installation deviation of the camera is too large and the camera needs to be adjusted (for example, reinstalled).

In an example, two boundaries that define the second width may be determined from the image through edge detection.

Therefore, a calibration part including a base portion with a preset width and a protruding portion with a preset height protruding from the base portion is used, and the width of a portion not blocked by the protruding portion of the calibration plane of the base portion of the calibration part in the image captured by the camera is determined, thus effectively determining the installation deviation of the camera relative to the object to be detected, and helping to identify the extent of influence of the installation deviation on visual detection using the camera.

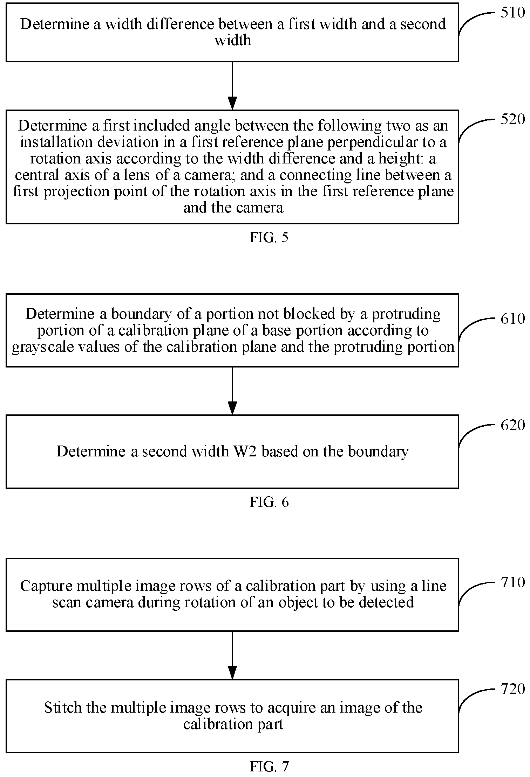

FIG. 5 is a flowchart of some processes of a method 200 for determining an installation deviation of a camera in some embodiments of the present application.

According to some embodiments of the present application, as shown in FIG. 5, the object to be detected is rotatable around a rotation axis thereof, and step 240, i.e., the determining the installation deviation of the camera relative to the object to be detected according to the first width, the second width, and a height of the protruding portion protruding from the base portion, may include the following:

 step 510: determine a width difference between a first width and a second width; and
 step 520: determine a first included angle between the following two as an installation deviation in a first reference plane perpendicular to a rotation axis according to the width difference and a height: a central axis of a lens of a camera; and a connecting line between a first projection point of the rotation axis in the first reference plane and the camera.

Continuously referring to FIG. 3 and FIG. 4, in step 510, a width difference W3 between the first width W1 and the second width W2 is determined.

In step 520, a first included angle $\alpha$ between the following two as the installation deviation in a first reference plane (for example, a plane of the top view shown in FIG. 3) perpendicular to the rotation axis according to the width difference W3 and the height H: a central axis A5 of a lens of the camera; and a connecting line A4 between a first projection point P1 of the rotation axis in the first reference plane and the camera 130.

For example, a value of the first included angle $\alpha$ may be determined through an equation $\alpha=\arctan(W3/H)$ according to the principle of corresponding angles.

In an example, the protruding portion 320 of the calibration part 300 may protrude from the base portion 310 in a direction perpendicular to the calibration plane 311.

In an example, the base portion 310 of the calibration part 300 may be a cube-shaped protruding portion to determine the value of the first included angle $\alpha$ more simply and accurately.

In an example, the protruding portion 320 of the calibration part 300 may be a cube-shaped protruding portion to determine the value of the first included angle $\alpha$ more simply and accurately.

In an example, as shown in FIG. 4, two edges of a bottom surface of the protruding portion 320 of the calibration part 300 may be aligned with corresponding two edges of a top surface of the base portion 310, and the other two edges of the bottom surface of the protruding portion 320 may be parallel to the corresponding two edges of the top surface of the base portion 310.

Therefore, the installation deviation angle of the camera can be determined, thus further quantifying the installation deviation of the camera.

FIG. 6 is another flowchart of some processes of a method 200 for determining an installation deviation of a camera in some embodiments of the present application.

According to some embodiments of the present application, as shown in FIG. 6, a surface of the calibration plane may be configured such that in the image of the calibration part, a grayscale value of the calibration plane is different from a grayscale value of the protruding portion, and step 230, i.e., the determining a second width of a portion not blocked by the protruding portion of the calibration plane of the base portion in the image of the calibration part, may include the following:

> step 610: determine a boundary of a portion not blocked by a protruding portion of a calibration plane of a base portion according to grayscale values of the calibration plane and the protruding portion; and
> step 620: determine a second width W2 based on the boundary.

Further referring to FIG. 4, a surface of calibration plane 311 may be configured such that in the image of the calibration part, a grayscale value of the calibration plane 311 is different from a grayscale value of the protruding portion 320.

In an example, a material of the surface of the calibration plane 311 may be different from a material of the protruding portion 320, thus making the grayscale values of the two different in the image of the calibration part.

In an example, the color or brightness of the surface of the calibration plane 311 may be configured different from that of the protruding portion 320, thus making the grayscale values of the two different in the image of the calibration part.

In step 610, the boundary of the portion not blocked by the protruding portion of the calibration plane of the base portion is determined according to the grayscale values of the calibration plane 311 and the protruding portion 320. For example, the calibration plane 311 may have a smaller grayscale value than the protruding portion 320. For example, the calibration plane 311 and the protruding portion 320 can be distinguished by setting a grayscale threshold, thus determining the boundary between the two. Alternatively, other boundary detection algorithms may be adopted to detect the boundary between the calibration plane 311 and the protruding portion 320 based on grayscale values. Next, in step 620, the second width W2 is determined based on the determined boundary.

Therefore, the efficiency and accuracy of determining the second width W2 can be further improved, thus improving the efficiency and accuracy of determining the installation deviation of the camera relative to the object to be detected.

According to some embodiments of the present application, the object to be detected is a winding mandrel for winding a battery electrode plate.

The winding mandrel may be used for winding a positive electrode plate or a negative electrode plate. The winding mandrel may be in a form of a winding needle. A mandrel body of the winding mandrel may be made of a wear-resistant material. The mandrel body needs to be able to withstand the tension in a winding process and have certain rigidity and stability. In addition, in order to increase the wear resistance and corrosion resistance of the winding mandrel, coating treatment such as chrome plating or spray coating may be performed on a surface of the mandrel body. In addition, a control system and a driving apparatus that are associated with each other may be arranged to control and drive the rotation of the winding mandrel.

Therefore, the method 200 for determining the installation deviation of the camera is applicable to the scenario where the winding mandrel is used.

FIG. 7 is another flowchart of some processes of a method 200 for determining an installation deviation of a camera in some embodiments of the present application.

According to some embodiments of the present application, the camera may include a line scan camera, and as shown in FIG. 7, step 220, i.e., the capturing an image of the calibration part by using the camera, may include the following:

> step 710: capture multiple image rows of a calibration part by using a line scan camera during rotation of an object to be detected, where each image row extends along a direction parallel to a rotation axis; and
> step 720: stitch the multiple image rows to acquire an image of the calibration part.

The line scan camera, also known as a linear array camera, may be used in occasions where there is relative movement between the object to be detected and the camera. Its characteristic is that when photographing, the camera and the object to be photographed move at a relatively constant speed, just like scanning. An imaging principle of the line scan camera is to use a single row of sensor pixels (with an effective value of one dimension) to construct a two-dimensional image, with a second dimension coming from the movement of the imaged object. When the object moves (vertically) through the pixel lines in the image sensor, a two-dimensional image is acquired row by row through continuous single-row scanning. Compared to the area array camera, the line scan camera can achieve higher resolution and larger imaging field of view.

After multiple image rows of the calibration part are captured by using the line scan camera, one-dimensional image data are obtained. Next, the obtained one-dimensional image data may be stitched together to form a two-dimensional image. In an example, the stitched image may have a certain overlap area to facilitate the accuracy of stitching. In addition, for images under different lighting conditions, lighting compensation may be performed to improve the quality of the stitched image. In an example, a corresponding motion compensation algorithm may be used for stitching the image to improve the stability of the stitched image.

By using the line scan camera to capture multiple image rows of the calibration part during the rotation of the object to be detected, and stitching the image rows captured by the line scan camera, higher resolution image data of the calibration part can be obtained, thus better meeting the need of capturing the image of the calibration part of rotating motion during rotation.

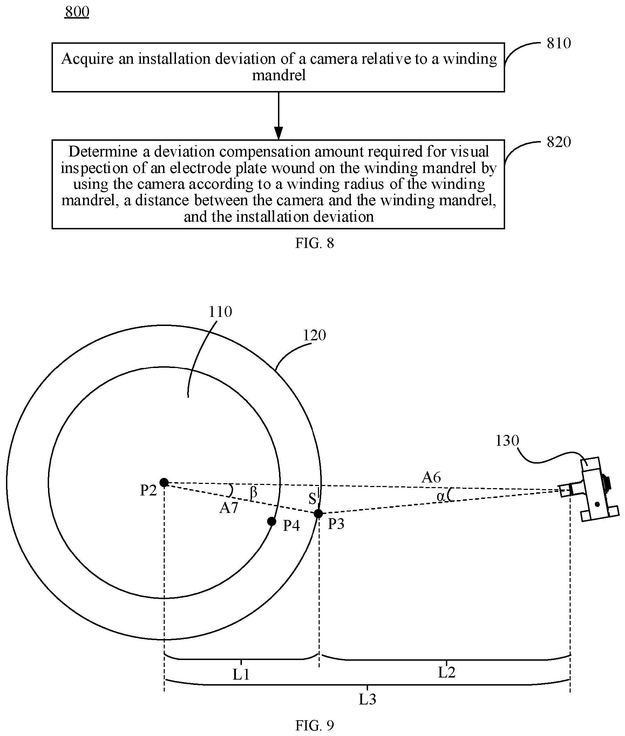

An embodiment of the present application provides a visual detection compensation method for an electrode plate winding system. FIG. 8 is a flowchart of a visual detection compensation method 800 for an electrode plate winding system in some embodiments of the present application.

The electrode plate winding system includes a camera and a winding mandrel for winding a battery electrode plate. The camera is configured to capture an image of the winding mandrel. As shown in FIG. 8, the visual detection compensation method 800 for the electrode plate winding system includes the following:

> step 810: acquire an installation deviation of a camera relative to a winding mandrel; and
> step 820: determine a deviation compensation required for visual detection of an electrode plate wound on the winding mandrel by using the camera according to a winding radius of the winding mandrel, a distance between the camera and the winding mandrel, and the installation deviation.

The winding radius of the winding mandrel refers to a radius of the outermost periphery of the winding mandrel during winding. For example, when the winding mandrel rotates without winding, the winding radius of the winding mandrel is the radius of the winding mandrel itself. When the winding mandrel winds the electrode plate, the winding radius of the winding mandrel is a sum of the radius of the winding mandrel itself and a thickness of the wound electrode plate.

The distance between the camera and the winding mandrel may refer to a distance between the lens of the camera and the winding mandrel, or a distance between the imaging plane of the camera and the winding mandrel.

Since the installation deviation has been determined in the method 200, a deviation compensation required for visual detection of the electrode plate wound on the winding mandrel by using the camera may be further determined according to the winding radius of the winding mandrel, and the distance between the camera and the winding mandrel. For example, the extent of compensation required is determined according to the extent of installation deviation.

Therefore, when there is a deviation in the installation of the camera, it can compensate for the installation deviation during visual detection, thus reducing the influence of the installation deviation of the camera on a visual detection result.

According to some embodiments of the present application, step 820, i.e., the determining a deviation compensation required for visual detection of the electrode plate wound on the winding mandrel by using the camera according to a winding radius of the winding mandrel, a distance between the camera and the winding mandrel, and the installation deviation may include the following:

determine a second included angle between the following two as the deviation compensation in a second reference plane perpendicular to a rotation axis of the winding mandrel: a connecting line between a second projection point of the rotation axis in the second reference plane and the camera; and a connecting line between a reference point and the second projection point, where the reference point is an intersection point between a central axis of a lens of the camera and a current outer periphery of the wound electrode plate.

FIG. 9 is a schematic diagram of determining a second included angle by using a visual detection compensation method for an electrode plate winding system in some embodiments of the present application. Referring to FIG. 9, in a second reference plane (such as a plane of the top view shown in FIG. 9) perpendicular to the rotation axis of the winding mandrel, a connecting line A6 between a second projection point P2 of the rotation axis in the second reference plane and a camera 130 is determined; and a connecting line A7 between a reference point P3 and the second projection point P2 is determined. Next, a second included angle β between the connecting line A6 and the connecting line A7 is determined as the deviation compensation.

For example, a value of the second included angle β may be determined through an equation $\beta = \arctan(S/L1)$.

L1 is approximately equal to the winding radius of the winding mandrel. For example, when the winding mandrel rotates without winding, L1 is approximately equal to the radius of the winding mandrel itself. When the winding mandrel winds the electrode plate, L1 is approximately equal to a sum of the radius of the winding mandrel itself and a thickness of the wound electrode plate.

S is an opposite side of the second included angle β in FIG. 9, and also an opposite side of the first included angle α. A value of S may be obtained based on L2 and the known first included angle α.

$$S = L2 * \tan \alpha = (L3 - L1) * \tan \alpha$$

L3 is the distance between the camera and the winding mandrel (for example, it may be the distance between the lens of the camera and the winding mandrel, or the distance between an imaging plane of the camera and the winding mandrel).

Therefore, $\beta = \arctan(S/L1) = \arctan[(L3-L1)*\tan \alpha /L1]$

Therefore, the deviation compensation angle can be determined, thus further quantifying the deviation compensation.

According to some embodiments of the present application, the winding radius is associated with a radius of a winding mandrel and the current number of layers of the wound electrode plate, and the visual detection compensation method 800 for the electrode plate winding system may further include the following:

determine, for an $N^{th}$-layer electrode plate segment wound on the winding mandrel, a misalignment amount of a battery tab of the $N^{th}$-layer electrode plate segment relative to a battery tab of a first-layer electrode plate segment according to the second included angle, where N is an integer greater than 1.

For the first-layer electrode plate segment wound on the winding mandrel, according to the method described in the above embodiment, in the second reference plane (such as a plane of the top view shown in FIG. 9) perpendicular to the rotation axis of the winding mandrel, a connecting line between a second projection point P2 of the rotation axis in the second reference plane and the camera 130 may be determined; and a connecting line between a reference point P4 and the second projection point P2 is determined. Next, a second included angle (not shown) between the two connecting lines is determined.

Correspondingly, for the $N^{th}$-layer electrode plate segment wound on the winding mandrel, according to the method described in the above embodiment, a second included angle β is determined, the second included angle β may be different from the second included angle obtained in the first-layer polar segment, and a misalignment amount of a battery tab of the $N^{th}$-layer electrode plate segment relative to a battery tab of the first-layer electrode plate segment may be determined based on the difference between the two.

Therefore, in a case that there is a deviation in the installation of the camera, the misalignment of the tab in the wound electrode plate can still be accurately detected.

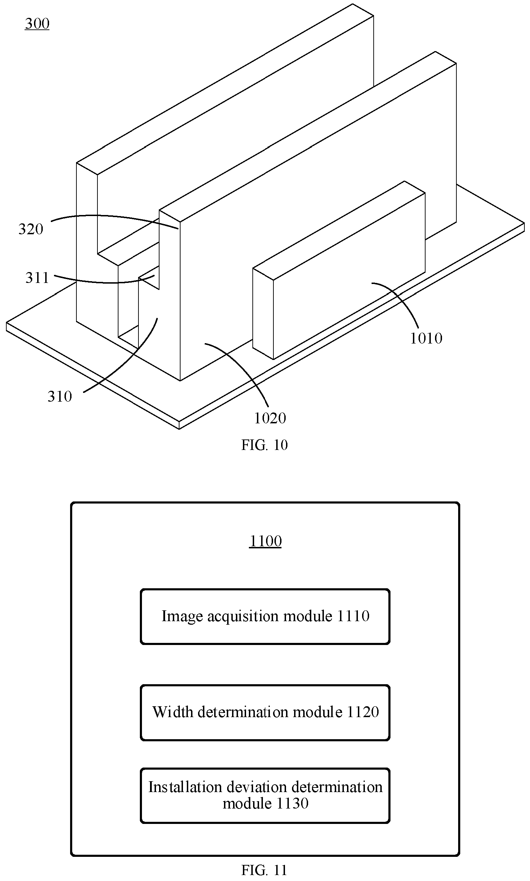

An embodiment of the present application provides a calibration part. FIG. 10 is a schematic diagram of a calibration part 300 in some embodiments of the present application.

As shown in FIG. 10, the calibration part 300 includes:

a fixing portion 1010, where the fixing portion 1010 is configured to fix the calibration part 300 onto an object to be detected when the calibration part 300 is installed to the object to be detected; and

at least one stepped bump 1020, where the at least one stepped bump 1020 includes: a base portion 310; and a protruding portion 320 protruding from the base portion, where the base portion 310 has a calibration plane 311 adjacent to a root of the protruding portion 320.

The fixing portion 1010, for example, may be a screw or a fastener. In an example, the fixing portion 1010 may be tied and fixed onto the object to be detected (such as a winding mandrel) through a tying strap.

In an example, a base of the fixing portion 1010 may have a shape that adapts to the object to be detected. For example, when the object to be detected is a winding mandrel, a shape of the base of the fixing portion 1010 may have a corresponding arc shape to facilitate the installation on an outer surface of the winding mandrel.

A step of the at least one stepped bump 1020 is formed through the base portion 310 and the protruding portion 320. A direction of the formed step may be set according to the need. When calibration is performed, the protruding portion 320 may be oriented towards the camera to be calibrated, so that when the camera captures an image, the protruding portion 320 can at least partially block the calibration plane 311 of the base portion 310.

In an example, the at least one stepped bump 1020 may also have more steps.

The method of using the calibration part 300 has been described above, which will not be repeated here.

Therefore, the calibration part 300 can be used for identifying and calibrating a deviation angle of the camera.

According to some embodiments of the present application, the at least one stepped bump includes two stepped bumps, and the two stepped bumps are arranged in axial symmetry.

As shown in FIG. 10, the two stepped bumps are arranged in axial symmetry. In an example, stepped regions of the two stepped bumps may be arranged facing towards each other or away from each other.

By arranging two stepped bumps which are arranged in axial symmetry, it can identify and calibrate the forward and reverse installation deviations of the camera.

An embodiment of the present application provides an apparatus for determining an installation deviation of a camera. FIG. 11 is an exemplary block diagram of an apparatus 1100 for determining an installation deviation of a camera in some embodiments of the present application.

Referring to FIG. 11, the apparatus 1100 for determining the installation deviation of the camera includes:

an image acquisition module 1110 configured to control the camera to capture an image of a calibration part, where the calibration part is fixed onto an object to be detected, the calibration part includes a base portion and a protruding portion protruding from the base portion, the base portion has a calibration plane adjacent to a root of the protruding portion, and the calibration plane has a first width;

a width determination module 1120 configured to determine a second width of a portion not blocked by the protruding portion of the calibration plane of the base portion in the image of the calibration part; and

an installation deviation determination module 1130 configured to determine the installation deviation of the camera relative to the object to be detected according to the first width, the second width, and a height of the protruding portion protruding from the base portion.

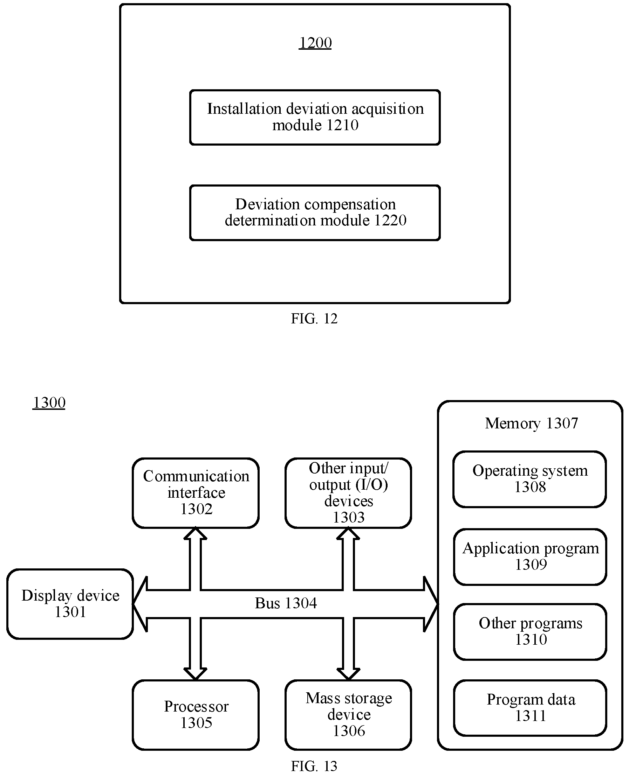

An embodiment of the present application provides a visual detection compensation apparatus for an electrode plate winding system. FIG. 12 is an exemplary block diagram of a visual detection compensation apparatus 1200 for an electrode plate winding system in some embodiments of the present application.

Referring to FIG. 12, the visual detection compensation apparatus 1200 for the electrode plate winding system includes:

an installation deviation acquisition module 1210 configured to acquire an installation deviation of the camera relative to a winding mandrel; and

a deviation compensation determination module 1220 configured to determine a deviation compensation required for visual detection of the electrode plate wound on the winding mandrel by using the camera according to a winding radius of the winding mandrel, a distance between the camera and the winding mandrel, and the installation deviation.

The installation deviation acquisition module 1210 may acquire an installation deviation of the camera relative to the winding mandrel by using the method 200 for determining the installation deviation of the camera described above.

The image acquisition module 1110, the width determination module 1120, and the installation deviation determination module 1130 in the apparatus 1100 for determining the installation deviation of the camera may correspond to step 220 to step 240 in the method 200 for determining the installation deviation of the camera shown in FIG. 2; and the installation deviation acquisition module 1210 and the deviation compensation determination module 1220 in the visual detection compensation apparatus 1200 for the electrode plate winding system may correspond to step 810 to step 820 in the visual detection compensation method 800 for the electrode plate winding system shown in FIG. 8, which will not be repeated here, for the sake of simplicity. It needs to be understood that, corresponding to the embodiment of the method 200 for determining the installation deviation of the camera, the embodiment of the apparatus 1100 for determining the installation deviation of the camera may further include more modules; and corresponding to the embodiment of the visual detection compensation method 800 for the electrode plate winding system, the embodiment of the visual detection compensation apparatus 1200 for the electrode plate winding system may further include more modules.

It needs to be noted that the functions of the various modules discussed herein may be divided into multiple modules, and/or at least some of the functions of multiple modules may be combined into a single module. A specific module executing an action discussed herein include the specific module itself executing the action, or alternatively, the specific module invoking or otherwise accessing another component or module that executes the action (or executing the action together with the specific module). Therefore, a specific module that executes an action may include the specific module that executes the action itself and/or another module that the specific module invokes or otherwise accesses to execute the action.

It also needs to be understood that various technologies may be described in the general context of software and hardware components or program modules. The various modules described above regarding FIG. 11 and FIG. 12 may be implemented in hardware or in hardware combined with software and/or firmware. For example, these modules may be implemented as computer program codes/instructions configured to be executed in one or more processors and stored in a computer-readable storage medium. Alternatively, these modules may be implemented as a hardware logic/circuit. The hardware logic/circuit may include an integrated circuit chip (which includes a processor (such as a Central Processing Unit (CPU), a microcontroller, a microprocessor, or a Digital Signal Processor (DSP)), a memory, one or more communication interfaces, and/or one or more components in other circuits), and may optionally execute received program codes and/or include embedded firmware to execute functions.

An embodiment of the present application provides a computing device. FIG. 13 is a block diagram of an exemplary computing device 1300 applicable to an exemplary embodiment.

The computing device includes: at least one processor; and at least one memory in communication with the at least one processor. The at least one memory has instructions stored therein. The instructions, when executed by the at least one processor solely or jointly, cause the computing device to execute the method in the embodiment of the present application.

An embodiment of the present application provides a computer-readable storage medium having instructions stored therein. The instructions, when executed by one or more processors of a computing device solely or jointly, cause the computing device to execute the method in the embodiment of the present application.

An embodiment of the present application provides a computer program product, including instructions. The instructions, when executed by one or more processors of a computing device solely or jointly, cause the computing device to execute the method in the embodiment of the present application.

FIG. 13 shows an exemplary configuration of a computing device 1300 that may be used for implementing the methods described herein. For example, the apparatus 1100 for determining the installation deviation of the camera or the visual detection compensation apparatus 1200 for the electrode plate winding system may be fully or at least partially implemented by the computing device 1300 or similar devices or systems.

The computing device 1300 may include at least one processor 1305, a memory 1307, communication interface(s) 1302, a display device 1301, other input/output (I/O) devices 1303, and one or more mass storage devices 1306 that are capable of communicating with each other, such as through a system bus 1304 or other appropriate connections. The memory 1307 may store instructions therein. The instructions, when executed by the processor 1305, cause the processor 1305 to execute the method in the above embodiment.

The computing device 1300 may be various types of devices. Examples of the computing device 1300 include, but not limited to, desktop computers, server computers, laptop or netbook computers, mobile devices (such as tablets, cellular or other wireless phones (such as smart phones), notebook computers, or mobile stations), wearable devices (such as glasses or watches), entertainment devices (such as entertainment appliances, set-top boxes communicatively coupled to display devices, or game consoles), televisions or other display devices, car computers, and so on.

The processor 1305 may be a single processing unit or multiple processing units, each of which may include a single or multiple computing units or multiple cores. The processor 1305 may be implemented as one or more microprocessors, microcomputers, microcontrollers, digital signal processors, central processing units, state machines, logic circuits, and/or any devices that manipulate signals based on operating instructions. In addition to other capabilities, the processor 1305 may be configured to acquire and execute computer-readable instructions stored in the memory 1307, the mass storage device 1306, or any other computer-readable medium, such as program codes of an operating system 1308, program codes of an application program 1309, program codes of other programs 1310, etc.

The memory 1307 and the mass storage device 1306 are examples of the computer-readable storage medium for storing instructions. The instructions are executed by the processor 1305 to implement various functions described above. For example, the memory 1307 may generally include a volatile memory or a non-volatile memory (such as RAM or ROM). In addition, the mass storage device 1306 may generally include hard drives, solid-state drives or removable media, including external and removable drives, memory cards, flash memories, floppy disks, optical disks (such as CDs or DVDs), storage arrays, network attached storage, storage area networks, etc. The memory 1307 and the mass storage device 1306 may be collectively referred to as a memory or computer-readable storage medium herein, and may be a non-transient medium capable of storing computer-readable and processor-executable program instructions as computer program codes. The computer program codes may be executed by the processor 1305 as a specific machine configured to implement the operations and functions described in the examples herein.

Multiple programs may be stored in the mass storage device 1306. These programs include an operating system 1308, one or more application programs 1309, other programs 1310, and program data 1311, and they may be loaded into the memory 1307 for execution. Examples of such application programs or program modules may include computer program logics (such as computer program codes or instructions) used for implementing the following components/functions.

Although illustrated in FIG. 13 as stored in the memory 1307 of the computing device 1300, the operating system 1308, the application program 1309, other programs 1310, and program data 1311 or portions thereof may be implemented using any form of computer-readable medium accessible by the computing device 1300.

One or more communication interfaces 1302 are used for exchanging data with other devices such as through a network, direct connection or the like. Such communication interface may be one or more of the following: any type of network interface (such as Network Interface Card (NIC)), wired or wireless (such as IEEE 802.11 Wireless LAN (WLAN)) wireless interface, Worldwide Interoperability for Microwave Access (Wi-MAX) interface, Ethernet interface, Universal Serial Bus (USB) interface, cellular network interface, Bluetooth™ interface, Near Field Communication (NFC) interface, etc. The communication interface 1302 may facilitate communication across various types of networks and protocols, including wired networks (such as LAN and cable) and wireless networks (such as WLAN, cellular network, or satellite), the Internet, etc. The communication interface 1302 may further provide communication with external storage apparatuses (not shown) such as storage arrays, network attached storage, storage area networks, etc.

In some examples, a display device 1301 such as a monitor may be included for displaying information and images to users. Other I/O devices 1303 may be devices that receive various inputs from users and provide various outputs to users, and may include touch input devices, gesture input devices, cameras, keyboards, remote controls, mice, printers, audio input/output devices, etc.

The technologies described herein may be supported by various configurations of the computing device 1300 and are not limited to the specific examples of the technologies described herein. For example, this feature may also be fully or partially implemented on the "cloud" through the use of a distributed system. Cloud includes and/or represents a platform for resources. The platform abstracts the underlying functions of hardware (such as servers) and software resources of the cloud. The resources may include applications and/or data that can be used to perform computing processing on servers away from the computing device 1300. The resources may further include services provided through the Internet and/or through subscriber networks such as cellular or Wi-Fi networks. The platform may abstract resources and functions to connect the computing device 1300 with other computing devices. Therefore, the implementation of the functions described herein may be distributed throughout the entire cloud. For example, the functions may be partially implemented on the computing device 1300 and partially through a platform that abstracts the functions of the cloud.

An embodiment of the present application further provides a computer-readable storage medium having instructions stored therein. The instructions, when executed by one or more processors of a computing device solely or jointly, cause the computing device to execute the method in any embodiment described above.

The computer-readable storage medium includes volatile and non-volatile, removable and non-removable media implemented by any method or technology for storing information, such as computer-readable instructions, data structures, program modules, or other data. The computer-readable storage medium includes, but not limited to, RAM, ROM, EEPROM, flash memory or other storage technologies, CD-ROM, Digital Versatile Disc (DVD), or other optical storage apparatuses, magnetic boxes, magnetic tapes, magnetic disk storage apparatuses, or other magnetic storage devices, or any other non-transmission medium that may be used for storing information for access by the computing device.

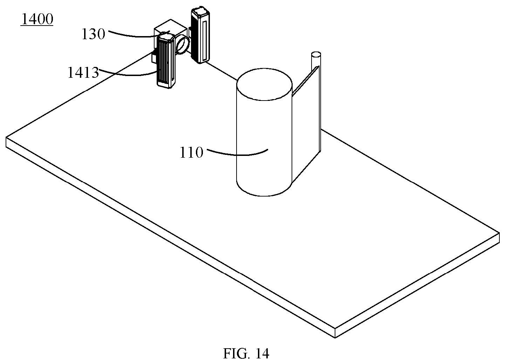

An embodiment of the present application provides a battery electrode plate winding system. FIG. 14 is a schematic diagram of a battery electrode plate winding system 1400 in some embodiments of the present application. Referring to FIG. 14, the battery electrode plate winding system 1400 includes: a winding machine (shown) including a winding mandrel 110 for winding a battery electrode plate; a camera 130 configured to capture an image to be detected of the electrode plate wound on the winding mandrel; and the computing device 1300 described above.

In an example, the camera 130 may include a line scan camera.

In an example, the battery electrode plate winding system 1400 may further include a line light source 1413, and the line light source 1413 is arranged on two sides of the camera 130.

Finally, it needs to be noted that the above embodiments are only intended to describe rather than limit the technical solution of the present application. Although the present application has been described in detail with reference to the embodiments above, those skilled in the art need to understand that modifications may still be made to the technical solutions described in the foregoing embodiments, or equivalent replacements may be made to part or all of the technical features; however, these modifications or replacements will not cause the essence of corresponding technical solutions to depart from the scope of the technical solutions in the embodiments of the present application, and are still be covered by the scope of the claims and description of the present application. Especially, as long as no structural conflict is caused, various technical features mentioned in various embodiments may be combined freely. The present application is not limited to the specific embodiments disclosed herein, but includes all technical solutions falling within the scope of the claims.

**Claims**

1. A method for determining an installation deviation of a camera, the camera being configured to capture an image of an object to be detected, wherein the method comprises:

   fixing a calibration part onto the object to be detected, wherein the calibration part comprises a base portion and a protruding portion protruding from the base portion, the base portion has a calibration plane adjacent to a root of the protruding portion, and the calibration plane has a first width;
   capturing an image of the calibration part by using the camera;
   determining a second width of a portion not blocked by the protruding portion of the calibration plane of the base portion in the image of the calibration part; and
determining the installation deviation of the camera relative to the object to be detected according to the first width, the second width, and a height of the protruding portion protruding from the base portion.

2. The method according to claim **1,** wherein the object to be detected is rotatable around a rotation axis thereof, and wherein the determining the installation deviation of the camera relative to the object to be detected according to the first width, the second width, and a height of the protruding portion protruding from the base portion comprises:

determining a width difference between the first width and the second width; and
determining a first included angle between the following two as the installation deviation in a first reference plane perpendicular to the rotation axis according to the width difference and the height:

a central axis of a lens of the camera; and
a connecting line between a first projection point of the rotation axis in the first reference plane and the camera.

3. The method according to claim 1 or 2, wherein a surface of the calibration plane is configured such that in the image of the calibration part, a grayscale value of the calibration plane is different from a grayscale value of the protruding portion, and wherein the determining a second width of a portion not blocked by the protruding portion of the calibration plane of the base portion in the image of the calibration part comprises:

determining a boundary of the portion not blocked by the protruding portion of the calibration plane of the base portion according to the grayscale values of the calibration plane and the protruding portion; and
determining the second width based on the boundary.

4. The method according to any one of claims 1 to 3, wherein the object to be detected is a winding mandrel for winding a battery electrode plate.

5. The method according to claim 2, wherein the camera comprises a line scan camera, and wherein the capturing an image of the calibration part by using the camera comprises:

capturing a plurality of image rows of the calibration part by using the line scan camera during rotation of the object to be detected, wherein each image row extends along a direction parallel to the rotation axis; and
stitching the plurality of image rows to acquire the image of the calibration part.

6. A visual detection compensation method for an electrode plate winding system, the electrode plate winding system comprising a camera and a winding mandrel for winding a battery electrode plate, the camera being configured to capture an image of the winding mandrel, and wherein the method comprises:

acquiring an installation deviation of the camera relative to the winding mandrel by using the method according to any one of claims 1 to 5; and
determining a deviation compensation required for visual detection of the electrode plate wound on the winding mandrel by using the camera according to a winding radius of the winding mandrel, a distance between the camera and the winding mandrel, and the installation deviation.

7. The method according to claim 6, wherein the determining a deviation compensation required for visual detection of the electrode plate wound on the winding mandrel by using the camera according to a winding radius of the winding mandrel, a distance between the camera and the winding mandrel, and the installation deviation comprises:
determining a second included angle between the following two as the deviation compensation in a second reference plane perpendicular to a rotation axis of the winding mandrel:

a connecting line between a second projection point of the rotation axis in the second reference plane and the camera; and
a connecting line between a reference point and the second projection point, wherein the reference point is an intersection point between a central axis of a lens of the camera and a current outer periphery of the wound electrode plate.

8. The method according to claim 7, wherein the winding radius is associated with a radius of the winding mandrel and a current number of layers of the wound electrode plate, and the method further comprises:
for an $N^{th}$-layer electrode plate segment wound on the winding mandrel, determining a misalignment amount of a battery tab of the $N^{th}$-layer electrode plate segment relative to a battery tab of a first-layer electrode plate segment according to the second included angle, where N is an integer greater than 1.

9. An apparatus for determining an installation deviation of a camera, the camera being configured to capture an image of an object to be detected, wherein the apparatus for determining the installation deviation of the camera comprises:

an image acquisition module configured to control the camera to capture an image of a calibration part, wherein the calibration part is fixed onto the object to be detected, and wherein the calibration part comprises a base portion and a protruding portion protruding from the base portion, the base portion has a calibration plane adjacent to a root of the protruding portion, and the calibration plane has a first width;

a width determination module configured to determine a second width of a portion not blocked by the protruding portion of the calibration plane of the base portion in the image of the calibration part; and

an installation deviation determination module configured to determine the installation deviation of the camera relative to the object to be detected according to the first width, the second width, and a height of the protruding portion protruding from the base portion.

10. A visual detection compensation apparatus for an electrode plate winding system, the electrode plate winding system comprising a camera and a winding mandrel for winding a battery electrode plate, the camera being configured to capture an image of the winding mandrel, and wherein the visual detection compensation apparatus for the electrode plate winding system comprises:

an installation deviation acquisition module configured to acquire an installation deviation of the camera relative to the winding mandrel by using the method according to any one of claims 1 to 5; and

a deviation compensation determination module configured to determine a deviation compensation required for visual detection of the electrode plate wound on the winding mandrel by using the camera according to a winding radius of the winding mandrel, a distance between the camera and the winding mandrel, and the installation deviation.

11. A computing device, comprising:

at least one processor; and
at least one memory in communication with the at least one processor, the at least one memory having instructions stored therein, and the instructions, when executed by the at least one processor solely or jointly, causing the computing device to execute the method according to any one of claims 1 to 8.

12. A battery electrode plate winding system, comprising:

a winding machine comprising a winding mandrel for winding a battery electrode plate;
a camera configured to capture an image to be detected of the electrode plate wound on the winding mandrel; and
the computing device according to claim 11.

13. A computer-readable storage medium having instructions stored therein, the instructions, when executed by one or more processors of a computing device solely or jointly, causing the computing device to execute the method according to any one of claims 1 to 8.

14. A computer program product, comprising instructions, the instructions, when executed by one or more processors of a computing device solely or jointly, causing the computing device to execute the method according to any one of claims 1 to 8.

FIG. 1

200

| Fix a calibration part onto an object to be detected | 210 |

↓

| Capture an image of the calibration part by using a camera | 220 |

↓

| Determine a second width of a portion not blocked by a protruding portion of a calibration plane of a base portion in the image of the calibration part | 230 |

↓

| Determine an installation deviation of the camera relative to the object to be detected according to a first width, the second width, a height of the protruding portion protruding from the base portion | 240 |

FIG. 2

FIG. 3

FIG. 4

Determine a width difference between a first width and a second width — 510

Determine a first included angle between the following two as an installation deviation in a first reference plane perpendicular to a rotation axis according to the width difference and a height: a central axis of a lens of a camera; and a connecting line between a first projection point of the rotation axis in the first reference plane and the camera — 520

FIG. 5

Determine a boundary of a portion not blocked by a protruding portion of a calibration plane of a base portion according to grayscale values of the calibration plane and the protruding portion — 610

Determine a second width W2 based on the boundary — 620

FIG. 6

Capture multiple image rows of a calibration part by using a line scan camera during rotation of an object to be detected — 710

Stitch the multiple image rows to acquire an image of the calibration part — 720

FIG. 7

EP 4 625 317 A1

800

| Acquire an installation deviation of a camera relative to a winding mandrel | 810 |

Determine a deviation compensation amount required for visual inspection of an electrode plate wound on the winding mandrel by using the camera according to a winding radius of the winding mandrel, a distance between the camera and the winding mandrel, and the installation deviation — 820

FIG. 8

FIG. 9

300

320

311

310

1010

1020

FIG. 10

1100

Image acquisition module 1110

Width determination module 1120

Installation deviation determination module 1130

FIG. 11

1200

Installation deviation acquisition
module 1210

Deviation compensation
determination module 1220

FIG. 12

1300

Communication
interface
1302

Other input/
output (I/O)
devices
1303

Memory 1307

Operating system
1308

Application program
1309

Display device
1301

Bus 1304

Other programs
1310

Processor
1305

Mass storage
device
1306

Program data
1311

FIG. 13

FIG. 14

## INTERNATIONAL SEARCH REPORT

| | International application No. |
|---|---|
| | **PCT/CN2024/110408** |

| A. | CLASSIFICATION OF SUBJECT MATTER |
|---|---|

G06T 7/00(2017.01)i

According to International Patent Classification (IPC) or to both national classification and IPC

| B. | FIELDS SEARCHED |
|---|---|

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 相机, 安装, 偏差, 标定件, 基部, 凸起, 突起, 根部, 平面, 宽度, 高度, camera, mount, deviation, calibration piece, base, convex, root, plane, width, height

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117541592 A (CONTEMPORARY AMPEREX TECHNOLOGY CO., LTD.) 09 February 2024 (2024-02-09) claims 1-14 | 1-14 |
| A | CN 110986885 A (CHANG'AN UNIVERSITY) 10 April 2020 (2020-04-10) description, paragraphs [0002]-[0071], and figures 1-4 | 1-14 |
| A | CN 114900688 A (GOERTEK INC.) 12 August 2022 (2022-08-12) entire document | 1-14 |
| A | WO 2023134745 A1 (ZHEJIANG DAHUA TECHNOLOGY CO., LTD.) 20 July 2023 (2023-07-20) entire document | 1-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 October 2024** | **18 October 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/110408**

| Patent document cited in search report | | | Publication date (day/month/year) | Patent family member(s) | | | Publication date (day/month/year) |
|---|---|---|---|---|---|---|---|
| CN | 117541592 | A | 09 February 2024 | None | | | |
| CN | 110986885 | A | 10 April 2020 | None | | | |
| CN | 114900688 | A | 12 August 2022 | None | | | |
| WO | 2023134745 | A1 | 20 July 2023 | CN | 114565677 | A | 31 May 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2024100375311